(19) Europäisches Patentamt

European Patent Office

Office européen des brevets

(11) **EP 1 964 368 B1**

(12) **FASCICULE DE BREVET EUROPEEN**

| | |
|---|---|
| (45) Date de publication et mention de la délivrance du brevet: **08.05.2013 Bulletin 2013/19** | (51) Int Cl.: ***H04L 29/06*** (2006.01) ***H04L 29/12*** (2006.01) ***H04L 12/66*** (2006.01) |
| (21) Numéro de dépôt: **06847110.1** | (86) Numéro de dépôt international: **PCT/FR2006/002835** |
| (22) Date de dépôt: **21.12.2006** | (87) Numéro de publication internationale: **WO 2007/071847 (28.06.2007 Gazette 2007/26)** |

(54) **PROCEDE ET PASSERELLE DE RACCORDEMENT D'ENTITES DE COMMUNICATION IP PAR L'INTERMEDIAIRE D'UNE PASSERELLLE RESIDENTIELLE**

VERFAHREN UND GATEWAY ZUR VERINDUNG VON IP-KOMMUNIKATIONSEINHEITEN ÜBER EIN RESIDENTIELLES GATEWAY

METHOD AND GATEWAY FOR CONNECTING IP COMMUNICATION ENTITIES VIA A RESIDENTIAL GATEWAY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2005 FR 0513291**

(43) Date de publication de la demande:
**03.09.2008 Bulletin 2008/36**

(73) Titulaire: **FRANCE TELECOM
75015 Paris (FR)**

(72) Inventeurs:
• **PROUVOST, Sébastien**
**F-92130 Issy Les Moulineaux (FR)**
• **GARCIN, Sébastien**
**F-92130 Issy les Moulineaux (FR)**
• **CHATRAS, Bruno**
**F-75012 Paris (FR)**

(74) Mandataire: **Cabinet Plasseraud
52, rue de la Victoire
75440 Paris Cedex 09 (FR)**

(56) Documents cités:
**WO-A-02/45373          US-A1- 2003 039 238
US-A1- 2004 252 683**

• **ROSENBERG J ET AL: "SIP: Session Initiation Protocol" IETF STANDARD, INTERNET ENGINEERING TASK FORCE, IETF, CH, juin 2002 (2002-06), pages 1-269, XP015009039 ISSN: 0000-0003**
• **ITU-T STUDY GROUP 16: "ITU-T Recommendation H.323: Packet-based multimedia communications systems" ITU-T, [Online] 14 juillet 2003 (2003-07-14), XP002402029 Geneva (Switzerland) ITU-T Extrait de l'Internet: URL:<http://mirror.itu.int/dms/pay/itu-t/r ec/h/T-REC-H.323-200307-S!!PDF-E.pdf> [extrait le 2006-10-06]**

**Description**

L'invention concerne un procédé et un système de raccordement de terminaux SIP, ou terminaux aptes à mettre en oeuvre un protocole d'établissement d'appel, par exemple le protocole SIP (pour Session Initiation Protocol en anglais) d'initiation de session, à des passerelles résidentielles.

D'emblée, on notera que par l'expression « passerelle résidentielle » on entend désigner une passerelle client, c'est-à-dire une passerelle située côté utilisateur, à la différence d'un équipement réseau situé dans le réseau sous le contrôle de l'opérateur. Il peut s'agir, à titre d'exemples non limitatifs, d'une passerelle à usage domestique au sein d'une habitation ou d'une passerelle à usage professionnel au sein d'une entreprise. D'une manière générale, il s'agit d'une passerelle à usage client.

De nombreuses offres de prestations de téléphonie sur réseau IP sont, à l'heure actuelle, basées sur des installations domestiques composées d'une passerelle résidentielle raccordant un ou plusieurs terminaux mono ou multimédia, tels que téléphones analogiques visiophones, ordinateurs personnels, téléviseurs numériques par exemple.

Les passerelles résidentielles précitées sont encore désignées passerelles résidentielles intelligentes, car elles permettent, en fait, de relier différentes catégories de réseaux.

La présente invention vise plus particulièrement les fonctionnalités des passerelles résidentielles destinées aux services de communication électronique temps réel, tels que la téléphonie VoIP (voix sur IP), la vidéo-téléphonie par exemple.

Les passerelles résidentielles précitées communiquent avec le réseau de l'opérateur grâce à un protocole de commande d'appel dont l'objectif est la création d'un contexte de communication de type VoIP entre deux terminaisons IP.

Le protocole SIP précité défini par l'IETF (Internet Engineering Task Force) a pour objectif de permettre l'établissement, la modification et la terminaison de sessions multimédia dans un réseau IP ou dans le cadre d'architectures de commande de réseaux basés sur un transport IP.

Le rôle des passerelles résidentielles dans les échanges de signalisation SIP dépend du type de terminal raccordé :

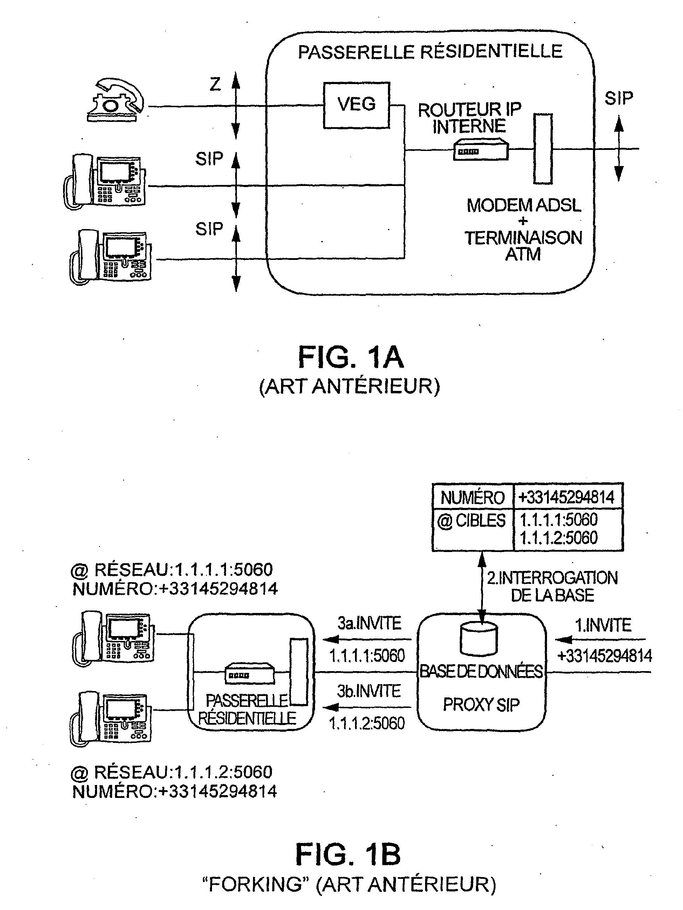

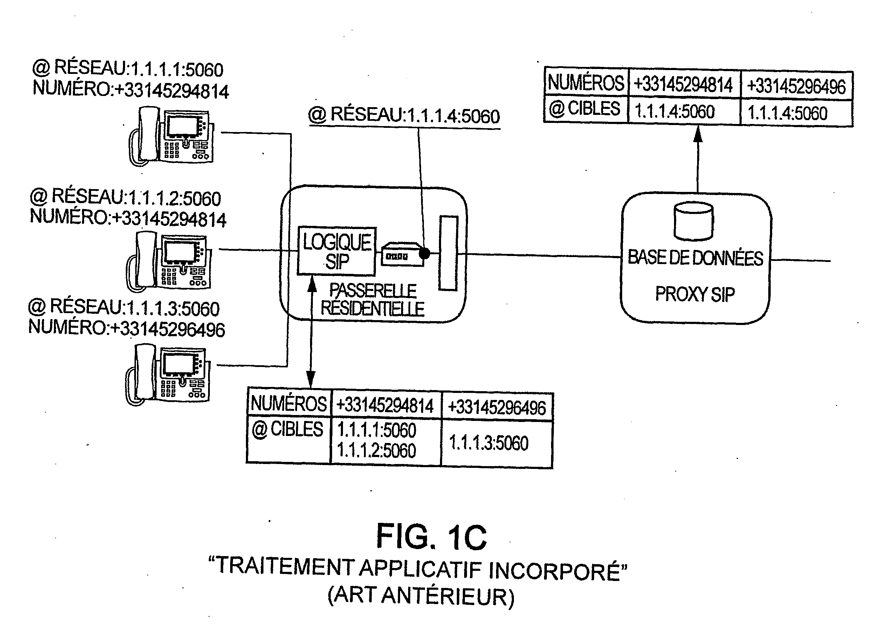

- lorsque le terminal raccordé n'est pas un terminal IP tel que terminal analogique, RNIS, Bluetooth, DECT ou autre, la passerelle joue le rôle de terminaison SIP en effectuant la traduction entre la signalisation SIP échangée avec le réseau et la signalisation échangée avec le terminal. Cette situation correspond au cas de la fonction VoIP Embedded Gateway « VEG » représenté en figure 1 a, ce type de terminal étant désigné terminal non-IP dans la présente demande de brevet ;
- lorsque le terminal raccordé est de type IP, tout terminal SIP, la passerelle résidentielle se comporte comme un simple routeur et oriente les messages SIP vers le ou les terminaux concernés. Ceux-ci jouent alors le rôle de terminaison pour le protocole SIP.

Les passerelles résidentielles actuelles sont susceptibles de fonctionner selon deux modes opératoires permettant de gérer la connexion multiligne, telle que représentée en figure 1 a.

Le protocole SIP comporte une phase d'enregistrement, dite phase REGISTER, qui a pour objet la création, dans le réseau, d'une association entre l'identité publique d'un utilisateur, à partir de laquelle ce dernier peut être joint, numéro de téléphone ou identifiant universel de ressource SIP URI pour Universal Ressource Identifier en anglais, et la ou les adresses réseau des terminaux permettant au réseau de contacter ces derniers. L'association précitée est stockée dans une base de données de localisation.

Le premier mode opératoire représenté en figure 1b, consiste à déclarer chaque terminal, séparément vis-à-vis du réseau, situé ou non derrière la même passerelle résidentielle, même lorsque ces terminaux partagent une même identité publique. Le réseau agit alors comme si les terminaux déclarés n'étaient pas hébergés par la même passerelle résidentielle.

Dans ce mode opératoire multiligne lors de la phase d'enregistrement, chaque terminal déclaré annonce son adresse réseau, couple adresse IP + port, et son identité publique, numéro de téléphone. L'association correspondante est stockée dans une base de données pour être interrogée par un équipement spécifique, tel qu'un proxy SIP, en charge d'acheminer les appels entrants vers leur(s) destination(s) finale(s).

Chaque terminal dispose a priori d'une adresse réseau différente des autres, indépendamment du fait qu'il partage ou non son identité publique avec un autre terminal.

Dans le cadre du mode opératoire précité, une même identité publique pointe ainsi sur plusieurs adresses réseau. A chaque appel entrant vers un numéro public donné, sur réception d'un message d'établissement d'appel, le proxy SIP fait suivre ce message vers chacune des destinations SIP via l'interrogation de la base de données. Dans ce système de distribution automatique d'appel désigné « forking », la passerelle résidentielle se contente de router les paquets IP entrants, comme le ferait un simple routeur IP.

Un deuxième mode opératoire, représenté en figure 1 c, consiste à incorporer dans la passerelle résidentielle un traitement applicatif permettant à cette dernière d'offrir au réseau une interface physique unique en prenant en charge l'acheminement final des appels entrants vers la ou les destinations SIP adéquates, c'est-à-dire les terminaux.

Lors de la phase d'enregistrement, la passerelle résidentielle émet des messages d'enregistrement pour le compte des terminaux qu'elle raccorde.

Plusieurs modes de mise en oeuvre sont envisageables, selon que les terminaux émettent ou n'émettent pas de messages d'enregistrement.

Dans la première hypothèse, la passerelle résidentielle intercepte les messages d'enregistrement « REGISTER » émis par les terminaux SIP et les modifie de manière à apparaître comme l'unique destination SIP pour l'ensemble des numéros attachés aux terminaux qu'elle connecte. En outre, la passerelle résidentielle stocke dans une base de données interne la correspondance entre l'identité publique attribuée au terminal et l'adresse réseau associée.

Dans la deuxième hypothèse, la passerelle résidentielle détermine à partir de données de configuration les associations entre adresses réseau des terminaux et identités publiques allouées correspondantes, puis émet un ou plusieurs messages d'enregistrement « REGISTER » à partir de ces associations et en se faisant passer là encore pour l'unique destination SIP à joindre. Sur réception par sa logique de traitement SIP interne d'un message d'établissement d'appel « INVITE », la passerelle résidentielle détermine l'identité publique visée par l'appel, par inspection de l'en-tête du message SIP « To », puis interroge sa base de données interne, afin de retrouver le ou les terminaux SIP concernés afin de leur faire suivre le message d'établissement d'appel « INVITE ».

Les premier et deuxième modes opératoires de l'art antérieur présentent les inconvénients ci-après.

La solution selon le premier mode opératoire selon la technique du « forking » nécessite le stockage à chaque instant par le réseau des informations de topologie de raccordement de toutes les passerelles résidentielles. Outre le stockage précité, ce mode opératoire conduit à engendrer plus de signalisation qu'il n'est nécessaire. En effet, les opérations d'enregistrement / dé-enregistrement des terminaux conduisent systématiquement à des échanges de messages d'enregistrement. De plus, lors d'un appel entrant, une requête d'établissement d'appel doit être émise vers chacun des terminaux. Le réseau doit alors prendre à sa charge l'annulation des transactions sans réponse par le terminal visé.

La solution selon le deuxième mode opératoire, traitement palliatif incorporé à la, passerelle, présente l'inconvénient d'ajouter des procédures applicatives non triviales à la passerelle résidentielle, ainsi qu'une mini-base de données interne. Cette solution apparaît donc comme préjudiciable pour les performances de la passerelle résidentielle.

La présente invention a pour objet de remédier aux inconvénients des solutions précitées de l'art antérieur.

Un objet de la présente invention est la mise en oeuvre d'un procédé et d'une passerelle résidentielle susceptibles de convenir à toutes les configurations de raccordement et terminaux derrière une passerelle résidentielle, notamment, une identité publique par terminal, une identité publique partagée par plusieurs terminaux, plusieurs identités publiques attachées au même terminal.

Un autre objet de la présente invention est en outre la mise en oeuvre d'un procédé et d'une passerelle résidentielle ne nécessitant aucune incorporation d'application dans la passerelle résidentielle, cette dernière n'ayant pas à avoir la connaissance de la correspondance entre les terminaux qu'elle raccorde et leurs identités publiques associées, afin de se ramener à une situation comparable au mode de prise en charge réseau via le « forking ».

Un autre objet de la présente invention est également la mise en oeuvre d'un procédé et d'une passerelle résidentielle dans lesquels la gestion de l'association terminal ou adresse terminal et identité publique n'est pas non plus effectuée par le réseau, lequel, en particulier, n'a pas à avoir connaissance du nombre de terminaux associés à une identité publique et de leur(s) adresse(s) réseau respective(s), le réseau devant avoir la seule connaissance de la correspondance entre l' ou les identité(s) publiques et l'adresse réseau de la passerelle résidentielle, afin de se ramener à une situation comparable au mode opératoire avec traitement applicatif SIP incorporé dans la passerelle. Ceci présente l'avantage de ne pas complexifier le traitement des appels entrants à destination d'un numéro correspondant à plusieurs terminaux situés derrière une même passerelle résidentielle.

En effet, dans de telles configurations de raccordement, une seule requête d'établissement d'appel est émise vers la passerelle, plutôt qu'une par terminal correspondant au numéro demandé.

En particulier, un objet de la présente invention est la mise en oeuvre d'un mécanisme de fonctionnement d'une passerelle résidentielle permettant de traiter des configurations de raccordement complexes, notamment adapté aux raccordements de terminaux partageant un même numéro d'appel, une passerelle résidentielle conforme à l'objet de l'invention étant qualifiée « multi-ligne » lorsque, raccordant plusieurs terminaux, une même identité publique est associée à ces derniers, un numéro téléphonique correspondant à un cas particulier d'identité publique.

Un autre objet de la présente invention est, enfin, la mise en oeuvre d'un procédé et d'une passerelle résidentielle fonctionnant avec un protocole de signalisation de commande d'appel basé sur une technologie IP, notamment, le protocole SIP défini par RFC 3261, le protocole H. 323 ou finalement tout autre protocole de commande d'appel du même type.

Un autre objet de la présente invention est également la mise en oeuvre d'un procédé et d'une passerelle résidentielle susceptibles d'être mis en oeuvre non seulement pour des terminaux SIP, mais également pour tout point de terminaison de type SIP interne à la passerelle résidentielle, représentant en fait une interface vers un terminal non-IP, les traitements nécessaires à une telle transition étant effectués par le module VEG correspondant interne à la passerelle résidentielle.

Le procédé de raccordement à un réseau IP, par l'intermédiaire d'une passerelle résidentielle, d'une pluralité d'entités de communication IP auxquelles sont attribuées des identités publiques respectives et aptes à mettre en oeuvre un protocole de commande d'appel, lesdites entités de communication IP, internes ou externes à la passerelle, étant connectées à celle-ci, objet de l'invention, est remarquable en ce qu'il comprend une étape préalable d'enregistrement des identités publiques respectives desdites entités de communication IP, chaque identité publique d'entité étant associée lors de l'enregistrement à une adresse réseau de la passerelle.

Ainsi, un message selon le protocole de commande d'appel et adressé à ladite identité publique est transmis à la passerelle.

En cas de réception par la passerelle d'un message selon le protocole de commande d'appel, une étape de transfert dudit message à partir de la passerelle vers toutes les entités connectées, et après réception du message par une entité connectée, une étape de filtrage du message par ladite entité, au cours de laquelle l'entité détermine si le message est adressé à l'identité publique qui lui est attribuée.

Le procédé objet de l'invention est en outre remarquable en ce que, dans le cas d'un message selon le protocole SIP, l'étape de filtrage du message est réalisée sur la base du contenu de l'un au moins des champs du groupe comprenant le champ d'identification du destinataire du message et le champ définissant l'unité en charge du traitement du message.

La passerelle résidentielle de raccordement à un réseau IP d'une pluralité d'entités de communication IP aptes à mettre en oeuvre un protocole de commande d'appel, cette passerelle résidentielle connectée au réseau IP disposant d'une adresse réseau IP, objet de l'invention, est remarquable en ce qu'elle comprend au moins un module de transfert vers toutes les entités de communication IP qui lui sont connectées de messages selon le protocole de commande d'appel, reçus par cette passerelle et adressés à une identité publique associée à l'une au moins des entités de communication IP connectées à la passerelle.

L'entité de communication IP à laquelle est attribuée une identité publique , objet de l'invention, est remarquable en ce qu'elle inclut au moins un module de filtrage de messages agencé pour déterminer si un message reçu est adressé à l'identité publique qui lui est attribuée.

L'entité de communication IP, est en outre remarquable en ce qu'elle est apte à être intégrée à une passerelle résidentielle et qu'elle comprend des moyens de communication avec un terminal de communication externe non-iP.

L'entité de communication IP, objet de l'invention est enfin remarquable en ce que le module de filtrage de messages est agencé pour, sur réception d'un message, analyser au moins l'un des champs du groupe comprenant un champ d'identification du destinataire du message et un champ définissant l'entité en charge du traitement du message, lesdits champs étant contenus dans le message reçu.

Le procédé, la passerelle résidentielle et l'entité de communication IP, objets de la présente invention, trouvent application à la gestion du raccordement des terminaux IP et des terminaux non-IP disposant d'une identité publique et déclenchant un protocole de commande d'appel, tels que les terminaux domestiques ou d'un réseau local mono ou multimédia téléphones analogiques, visiophones, PC ordinateurs personnels, téléviseurs numériques ou autres pouvant disposer d'une même identité publique.

Ils seront mieux compris à la lecture de la description et à l'observation des dessins ci-après dans lesquels, outre les figures 1a à 1c relatives à l'art antérieur :

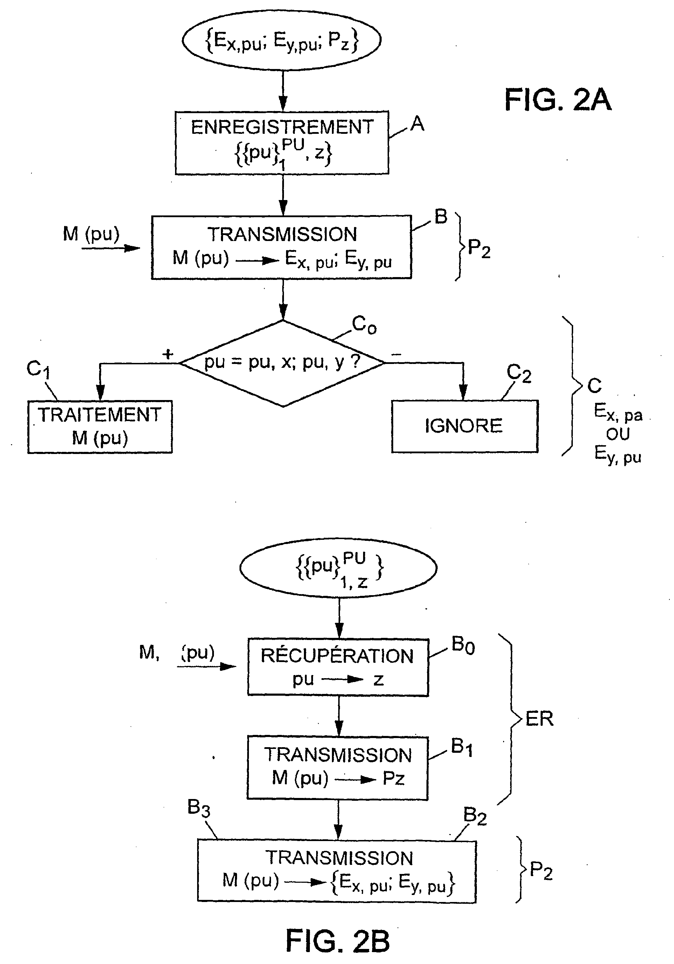

- la figure 2a représente, à titre illustratif, un organigramme des étapes essentielles de mise en oeuvre du procédé objet de la présente invention ;
- la figure 2b représente à titre illustratif un organigramme selon un mode de mise en oeuvre préférentiel non limitatif de l'étape de transfert de la passerelle résidentielle vers toutes les entités de communication IP à partir de la passerelle résidentielle ;

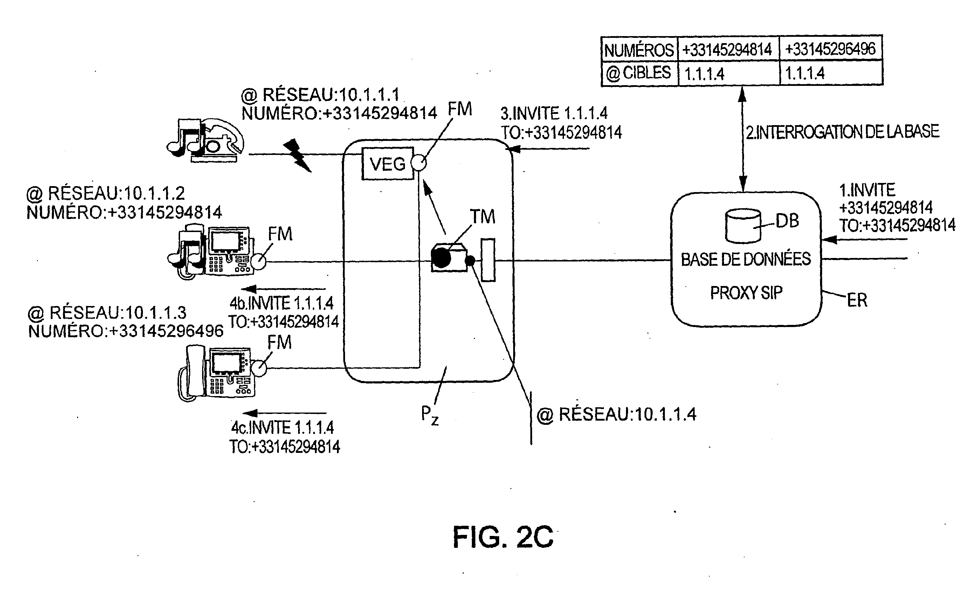

- la figure 2c représente, à titre illustratif, un exemple de mise en oeuvre du procédé de raccordement à un réseau IP d'entités de communication IP pour une installation comprenant une passerelle résidentielle connectée à un proxy SIP et à deux entités de communication IP ainsi qu'à un terminal non-IP, tel qu'un combiné de téléphonie fixe connecté à une entité de communication IP interne intégrée à la passerelle résidentielle, conformément à l'objet de la présente invention.

Le procédé de raccordement à un réseau IP d'entités de communication IP aptes à mettre en oeuvre un protocole de commande d'appel, par l'intermédiaire d'une passerelle locale, objet de l'invention, va maintenant être décrit de façon détaillée. Les entités de communication IP sont internes ou externes à la passerelle locale. Dans l'exemple particulier de la description, non limitatif, le protocole de commande d'appels est le protocole SIP et la passerelle locale est une passerelle résidentielle, située au domicile d'un usager.

Dans l'exemple, particulier décrit, pour la mise en oeuvre du procédé objet de l'invention, on considère :

- la passerelle résidentielle, notée $P_z$, z désignant l'adresse IP de la passerelle résidentielle,
- deux entités de communication IP constituées par des terminaux IP, externes à la passerelle $P_z$ et connectés à celle-ci, et notées $E_{x,pu}$ ou x désigne l'adresse IP de l'entité IP considérée et pu l'identité publique associée à l'entité IP considérée,
- une entité de communication IP constituée par un module VEG (pour <u>V</u>oIP <u>E</u>mbedded <u>G</u>ateway en anglais) de passerelle embarquée de voix sur IP, interne à la passerelle $P_z$ et connecté à celle-ci, et notée $E_{y,pu}$ où y désigne l'adresse IP de l'entité considérée et pu l'identité publique associée à l'entité IP considérée.

Bien entendu, l'invention peut s'appliquer à tout autre système de ce type comportant au moins une passerelle résidentielle et une pluralité d'entités de communication IP, internes ou externes à la passerelle et connectées à celle-ci.

Ainsi qu'on l'observera sur la figure 2a, le procédé de raccordement objet de l'invention consiste, en une étape A, à enregistrer l'identité publique de chaque entité de communication connectée, cette identité publique étant associée à l'adresse réseau z de la passerelle $P_z$ lors de l'enregistrement.

Sur la figure 2a, cette opération est notée :

$$\text{enregistrement } \{\{ \text{ pu } \}_1^{PU} , \dot{z}\}$$

L'enregistrement précité est effectué de manière que tout message selon le protocole de commande d'appel désigné ci-après, message noté M(pu), qu'il s'agisse d'une requête d'établissement d'appel ou de tout autre message transmis selon le protocole de commande d'appel, vers cette identité publique pu soit adressé à la passerelle résidentielle $P_z$.

L'étape A, suite à la réception de ce message M(pu) par la passerelle résidentielle, est suivie d'une étape B de transfert du message M(pu) à toutes les entités de communication IP, internes $E_{x,pu}$ ou externes $E_{y,pu}$ à la passerelle $P_z$ et connectées à celle-ci, à partir de la passerelle résidentielle $P_z$.

A l'étape B de la figure 2a, l'opération de transfert est notée :

$$\text{Transfert M(pu)} \longrightarrow E_{x,pu} ; E_{y,pu}.$$

L'opération B de transfert précitée, permet à chacune des entités de communication IP internes $EP_{x,pu}$ ou externes $EP_{y,pu}$ à la passerelle $P_z$ de filtrer ensuite le message M(pu), afin de déterminer si ce message est adressé à une identité publique qui lui est attribuée ou non.

D'une manière générale, on considère que le processus de raccordement, conforme au procédé de raccordement objet de l'invention, consiste au moins en les étapes A, B, décrites avec la figure 2a.

Toutefois, ce processus de raccordement pour exécuter le procédé de raccordement objet de l'invention est alors suivi au niveau de chaque entité de communication IP $E_{x,pu}$, $E_{y,pu}$ d'un processus de filtrage à l'étape C représentée sur la figure 2a précitée.

Ainsi qu'on l'observera sur la figure 2a, pour un message M(pu) chaque entité de communication IP interne ou externe peut procéder, en une étape $C_0$, à une vérification par comparaison de l'identité publique appelée dans le message M(pu) avec la propre identité publique qui lui est attribuée.

Cette étape est représentée à l'étape $C_0$ de la figure 2a par la relation de test :

$$pu = pu, x ; pu, y ?$$

Par le test précité, on comprend que chaque entité de communication IP interne ou externe destinataire du message M(pu) procède à une identification à l'étape $C_0$ précitée.

Sur réponse négative au test de l'étape $C_0$ précitée, l'entité de communication IP interne ou externe considérée à l'étape $C_2$ ignore le message.

Au contraire sur réponse positive au test de l'étape $C_0$, c'est-à-dire en cas d'identité entre l'identité publique appelée dans le message reçu et l'identité publique attribuée à l'entité de communication IP interne ou externe considérée, l'étape $C_0$ est suivie d'une étape $C_1$ de traitement du message M(pu) précité. De manière spécifique, on indique que le processus de filtrage des messages reçus, ces messages ayant été transmis selon le protocole SIP, consiste à déterminer, pour chaque message reçu par une entité de communication IP, si le message est adressé à l'identité publique attribuée à cette entité de communication IP soit à partir du champ d'identification du destinataire du message, c'est-à-dire le champ désigné par champ « To » selon le protocole SIP, soit à partir du champ définissant l'unité en charge du traitement du message, c'est-à-dire à partir du champ désigné « REQUEST URI » selon le protocole SIP.

Lorsque l'entité de communication IP interne ou externe $E_{x,pu}$ $E_{y',pu}$ se reconnaît comme destinataire par exemple d'une requête, cette dernière effectue le traitement associé à la réception de la requête précitée, ce traitement pouvant par exemple consister dans le fait de sonner sur réception d'une requête d'établissement d'appel, la sonnerie intervenant soit au niveau de l'entité de communication IP, soit au contraire au niveau du terminal non-IP lorsque ce dernier est relié à une entité de communication IP interne qui lui est associée.

Sinon, ainsi que représenté en figure 2a, la requête d'établissement d'appel M(pu) est alors ignorée.

D'une manière plus spécifique, l'étape de transfert B de la figure 2a, est exécutée par transfert sur le réseau IP du message M(pu) vers chacune des entités de communication IP externes connectées à partir de la passerelle résidentielle $P_z$.

Au contraire, dans le cas où la passerelle comporte et intègre des entités de communication IP internes auxquelles sont raccordés des terminaux non-IP, la passerelle résidentielle $P_z$ fait suivre les messages M(pu) précités à chacun des modules VEG internes correspondants, comme s'il s'agissait en fait d'un terminal IP. L'entité de communication IP sollicitée traite alors le message M(pu) de la même manière que le ferait un terminal IP.

Une description plus détaillée de l'opération de transmission B de la figure 2a sera maintenant donnée en liaison avec la figure 2b, cette opération de transmission étant effectuée au niveau de la passerelle résidentielle $P_z$.

D'une manière générale, on indique, à titre d'exemple non limitatif, que l'opération d'enregistrement A peut être effectuée par le réseau, cette opération étant décrite ultérieurement dans la description.

Dans ces conditions, on dispose au niveau de l'enregistrement effectué précité de l'enregistrement proprement dit de l'ensemble des identités publiques notées $\{\{ pu \}_1^{PU} , z\}$ associées à l'adresse réseau z de la passerelle résidentielle $P_z$.

D'une manière plus spécifique, lors de la transmission d'une requête d'établissement d'appel M(pu), cette requête est transmise par l'intermédiaire d'un équipement réseau ER formé par un proxy SIP lorsque le protocole SIP est mis en oeuvre, cet équipement réseau ER étant associé, entre autres à la passerelle $P_z$ et permettant de gérer cette passerelle $P_z$.

En référence à la figure 2b, l'équipement réseau ER procède sur réception du message M(pu) à la récupération de l'adresse réseau z de la passerelle résidentielle $P_z$ par identification de l'identité publique appelée pu, à partir de l'enregistrement précédemment mentionné, à la sous-étape $B_0$ de la figure 2b.

L'équipement réseau ER procède alors à la sous-étape $B_1$ à la transmission vers la passerelle résidentielle $P_z$ du message M(pu) à l'adresse z qui a été récupérée à l'étape précédente $B_0$.

Sur réception du message M(pu) par la passerelle résidentielle $P_z$, cette dernière, à la sous-étape $B_2$; procède au transfert du message M(pu) vers l'ensemble des entités de communication IP internes ou externes à la plateforme $P_z$ et connectées à celle-ci.

Une description plus détaillée du mode opératoire du procédé de raccordement, objet de l'invention, sera maintenant donnée en liaison avec la figure 2c dans une configuration domestique spécifique non limitative donnée à seul titre d'exemple.

On considère en particulier la configuration domestique initiale représentée en figure 2c, dans laquelle la passerelle $P_z$ dont l'adresse réseau IP est z = « 1.1.1.4 » raccorde deux terminaux associés à une même identité publique constituée par un numéro de téléphone + 33 14 52 94 814.

Le premier terminal, terminal de type non-IP, est représenté par un module VEG interne, constituant une entité de communication IP interne disposant d'une adresse IP y = « 10.1.1.1 ».

Le deuxième terminal de type entité de communication IP externe à la passerelle $P_z$ et raccordé à celle-ci dispose d'une adresse réseau x = « 10.1.1.2 ».

Ainsi que représenté en outre en figure 2c, la passerelle $P_z$ raccorde également un troisième terminal, de type entité de communication IP externe, dont l'identité publique est différente + 33 14 52 96 496 et disposant d'une adresse réseau x = « 10.1.1.3 ».

Conformément à un aspect remarquable du procédé objet de l'invention, l'étape A consistant à effectuer l'enregistrement peut avantageusement inclure la création d'une base de données de localisation DB de l'association entre l'ensemble des première et deuxième identités publiques précitées et de l'adresse IP de la passerelle résidentielle $P_z$.

Sur la figure 2c on comprend que l'enregistrement précité comporte les identités publiques + 33 14 52 94 814 et + 33 14 52 96 496 désignées numéros associés à la cible, c'est-à-dire à l'adresse IP de la passerelle résidentielle z = « 1.1.1.4 ».

Pour la mise en oeuvre de l'enregistrement précité plusieurs modes opératoires peuvent être effectués. L'enregistrement précité peut, par exemple, être configuré par défaut dans la base de données de localisation DB à la souscription de l'usager au service de téléphonie.

Cet enregistrement peut également être dynamique selon le mécanisme défini par la norme RFC3261 du protocole SIP pour Session Initiation Protocol. Dans cette hypothèse chaque terminal transmet une requête « REGISTER » au réseau, l'adresse de contact contenue dans ces messages de requête correspondant à l'adresse de contact de la passerelle résidentielle.

Dans l'exemple donné en liaison avec la figure 2c, lors d'une phase d'appel par exemple, l'équipement réseau ER responsable de la passerelle résidentielle $P_z$ reçoit un message constituant une requête d'établissement d'appel M (pu) à destination d'une identité publique, le numéro + 33 14 52 94 814 décrit précédemment. L'équipement réseau ER formé par le proxy SIP récupère dans la base de données de localisation DB l'adresse réseau z associée à cette identité publique et retransmet le message d'établissement d'appel vers cette adresse z. La passerelle résidentielle $P_z$ recevant ce message le fait suivre immédiatement vers les entités SIP de communication IP internes ou externes qu'elle raccorde.

Les terminaux IP et la terminaison IP examinent alors le champ SIP « To » de cette requête c'est-à-dire le champ contenant l'identité publique du terminal demandé, afin de déterminer si cette requête leur est destinée ou pas.

Les deux entités de communication IP externes ou internes SIP répondant au numéro + 33 14 52 94 814 déduisent alors de cette analyse que la requête leur est destinée et sonnent, tandis que l'entité de communication IP associée au numéro + 33 14 52 96 496 ignore le message de requête précité.

La suite de l'établissement de l'appel s'effectue ainsi que défini dans la norme RFC3261.

La chronologie des messages transmis entre l'entité réseau ER formée par le proxy SIP, la passerelle résidentielle $P_z$ et chacun des entités de communication IP représentées en figure 2c est la suivante :

    1 : INVITE ; To + 33 14 52 94 814
    2 : Interrogation DB
    3 : INVITE; 1.1.1.4; To + 33 14 52 94 814
    4a : Redirection ; 1.1.1.4 ; + 33 14 52 94 814 vers VEG
    4b : INVITE ; 1.1.1.4 ; To + 33 14 52 94 814 vers 10.1.1.2
    4c : INVITE ; 1.1.1.4 ; To + 33 14 52 96 496 vers 10.1.1.3

Une description plus détaillée d'une passerelle résidentielle de raccordement au réseau IP d'une pluralité d'entités de communication IP internes ou externes aptes à mettre en oeuvre un protocole de commande d'appel, cette passerelle résidentielle connectée au réseau IP disposant d'une adresse IP, conforme à l'objet de la présente invention, sera maintenant donnée en liaison avec la figure 2c.

Ainsi que représentée sur la figure 2c, la passerelle résidentielle $P_z$ inclut au moins un module de transfert noté TM ayant pour fonction de faire suivre vers toutes les entités de communication IP, internes ou externes à la passerelle $P_z$ et connectées à celle-ci, les messages reçus par la passerelle $P_z$, et adressés à au moins l'une parmi la pluralité d'identités publiques respectivement associées à ces entités de communication IP connectées.

On indique que le module de transfert TM précité peut être constitué par un module logiciel permettant d'assurer simplement la redirection du message M(pu) vers toute entité de communication IP interne, tel qu'un module VEG associé à un terminal non-IP, ainsi que décrit précédemment en liaison avec la figure 2c, ou, au contraire, la transmission par réseau c'est-à-dire par transmission d'un message « INVITE » dans le cadre du protocole SIP vers toute entité de communication IP externe connectée à la passerelle résidentielle $P_z$ précitée. Ces messages « INVITE » sont des messages 4b et 4c de la figure précédemment mentionnée dans la description.

L'entité de communication IP externe respectivement interne disposant d'une identité publique et d'une adresse IP, conforme à l'objet de la présente invention, est remarquable en ce que chacune de ces dernières inclut un module de filtrage FM des messages M(pu) reçus, ayant pour fonction de déterminer, pour chaque message reçu, si ce message est adressé à l'identité publique attribuée à l'entité de communication IP considérée.

Ce module de filtrage peut être constitué par un module logiciel directement implanté dans l'entité de communication IP considérée et en particulier dans le module VEG intégré à la passerelle résidentielle $P_z$.

Lorsque le module de filtrage FM est intégré au module VEG, c'est-à-dire à l'entité de communication IP interne à la passerelle $P_z$, cette entité de communication IP comporte avantageusement un module de communication avec un terminal non-IP externe à la passerelle $P_z$. Ce module de communication a pour rôle d'assurer la connexion du module VEG, interne à la passerelle $P_z$, au terminal non-IP, externe à la passerelle $P_z$, ainsi que la communication entre le module VEG et le terminal non-IP.

Ainsi que mentionné précédemment dans le cadre de la description du procédé objet de l'invention, on indique que le module de filtrage FM exécute une évaluation soit du champ d'identification du destinataire du message, soit du champ définissant l'unité en charge du traitement de ce message.

Ainsi que mentionné précédemment dans la description, il s'agit soit du champ « To » des messages SIP soit au contraire du champ définissant l'unité en charge du traitement par exemple le champ comportant l'adresse réseau « 10.1.1.1 » de l'entité de communication IP interne constituée par le module VEG intégré à la passerelle $P_z$ représentée en figure 2c, pour le terminal non-IP qui lui est associé.

L'invention couvre également un programme d'ordinateur pour une passerelle résidentielle comprenant des instructions aptes à commander le transfert, par la passerelle, d'un message selon un protocole de commande d'appel reçu par la passerelle, vers toutes les entités de communication IP qui lui sont connectées, lorsque le programme est exécuté par la passerelle. Ce programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

On comprend, bien sûr que, le produit de programme correspondant est alors mémorisé soit par téléchargement ou par toute autre manière au niveau de la passerelle résidentielle $P_z$ et en particulier dans le module de transfert TM représenté en figure 2c.

L'invention couvre également un programme d'ordinateur pour une entité de communication IP, telle que précédemment décrite, à laquelle une identité publique est attribuée, comprenant des instructions pour exécuter un filtrage des messages selon un protocole de commande d'appel reçus par ladite entité afin de déterminer si ces messages sont adressés à l'identité publique de ladite entité, lorsque le programme est exécuté par l'entité de communication IP. Ce programme peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

Dans la description qui précède, les messages sont transmis à la passerelle résidentielle selon le protocole SIP. L'invention s'applique également à la transmission de messages selon le protocole H323 ou selon tout autre protocole de commande d'appel prévu pour être mis en oeuvre par des entités de communication IP, connectées au réseau IP mais comportant chacune une identité publique qui leur est allouée, et faisant la distinction entre la notion d'identité publique et celle d'adresse réseau. Pour reprendre l'exemple particulier du protocole H323, ce protocole prévoit également une phase d'enregistrement permettant d'enregistrer dans le réseau la correspondance entre l'identité publique d'un utilisateur et l'adresse réseau de son point de localisation dans le réseau. Il suffit donc d'enregistrer, lors de cette phase d'enregistrement et via des messages définis par le protocole H323, la correspondance entre l'adresse réseau, en l'espèce l'adresse IP, de la passerelle résidentielle et les identités publiques respectives associées aux entités de communication IP qu'elle raccorde. La passerelle résidentielle a alors pour rôle de faire suivre tous les messages, notamment les requêtes d'établissement d'appel SETUP telles que définies par le protocole H323, qu'elle reçoit vers toutes les entités H323 qu'elle raccorde. De la même manière que dans le cas du protocole SIP, on laisse à la charge de chaque entité H323 l'opération de filtrage des messages reçus afin de déterminer, pour chaque message reçu, s'il est destiné à l'entité considérée ou non.

## Revendications

1. Procédé de raccordement à un réseau IP, par l'intermédiaire d'une passerelle résidentielle, d'une pluralité d'entités de communication IP auxquelles sont attribuées des identités publiques respectives et aptes à mettre en oeuvre un protocole de commande d'appel, lesdites entités de communication IP, internes ou externes à la passerelle, étant connectées à celle-ci, le procédé comprenant une étape préalable d'enregistrement des identités publiques respectives desdites entités de communication IP, chaque identité publique d'entité étant associée lors de l'enregistrement à une adresse réseau de la passerelle, **caractérisé en ce que** le procédé comprend en outre :

   - en cas de réception par la passerelle d'un message selon le protocole de commande d'appel et adressé à l'une desdites identités publiques, une étape de transfert dudit message à partir de la passerelle vers toutes les entités connectées ; et
   - après réception du message par une entité connectée, une étape de filtrage du message par ladite entité, au cours de laquelle l'entité détermine si le message est adressé à l'identité publique qui lui est attribuée.

2. Procédé selon la revendication 1, dans lequel le protocole de commande d'appel est l'un des protocoles du groupe comprenant le protocole SIP et le protocole H323.

3. Procédé selon la revendication 2, dans lequel, dans le cas d'un message selon le protocole SIP, l'étape de filtrage du message est réalisée sur la base du contenu de l'un au moins des champs du groupe comprenant le champ d'identification du destinataire du message et le champ définissant l'unité en charge du traitement du message.

4. Procédé selon l'une des revendications 1 à 3, dans lequel, dans le cas où lors de l'étape de filtrage, l'entité de communication IP détermine que le message reçu est adressé à l'identité publique qui lui est attribuée, ladite entité exécute un traitement associé au message.

**5.** Procédé selon l'une des revendications 1 à 4, dans lequel, au cours de l'étape d'enregistrement préalable, les identités publiques respectives des entités connectées et l'adresse réseau de la passerelle associée sont enregistrées dans une base de données de localisation, accessible à un équipement réseau de routage associé à la passerelle.

**6.** Procédé selon la revendication 5, dans lequel, en cas de réception par l'équipement réseau de routage d'un message d'établissement d'appel selon le protocole de commande d'appel, adressé à l'une des entités enregistrées en association avec l'adresse réseau de la passerelle, l'équipement réseau de routage récupère dans ladite base de données l'adresse réseau de la passerelle, à partir de l'identité publique à laquelle le message est adressé, puis transmet le message vers la passerelle à ladite adresse réseau récupérée.

**7.** Réseau de communication comprenant :

- une passerelle résidentielle de raccordement à un réseau IP d'une pluralité d'entités de communication IP aptes à mettre en oeuvre un protocole de commande d'appel , et
- au moins une entité de communication IP à laquelle est attribuée une identité publique, ladite entité de communication IP comprenant un module de filtrage de messages, agencé pour déterminer si un message reçu est adressé à l'identité publique qui lui est attribuée,

dans lequel, la passerelle connectée au réseau IP disposant d'une adresse réseau, la passerelle comprend un module de transfert, vers toutes les entités de communication IP qui lui sont connectées, de messages selon le protocole de commande d'appel, reçus par ladite passerelle et adressés à une identité publique associée à l'une des entités de communication IP connectées à la passerelle, chacun desdits messages étant destiné à être filtré par au moins une desdites entités de communication IP pour déterminer si ledit message est adressé à l'identité publique qui est attribuée à ladite entité de communication IP

**8.** Réseau de communication selon la revendication 7, **caractérisé en ce que** l'entité de communication IP est apte à être intégrée à une passerelle résidentielle et qu'elle comprend des moyens de communication avec un terminal de communication externe non-IP.

**9.** Réseau de communication selon l'une des revendications 7 et 8, dans lequel le module de filtrage de messages est agencé pour, sur réception d'un message, analyser au moins l'un des champs du groupe comprenant un champ d'identification du destinataire du message et un champ définissant l'entité en charge du traitement du message, lesdits champs étant contenus dans le message reçu.

**10.** Système de programmes d'ordinateur, dans lequel ledit système comporte :

- un programme d'ordinateur pour une passerelle résidentielle, **caractérisé en ce qu'**il comprend des instructions agencées pour commander le transfert par la passerelle d'un message selon un protocole de commande d'appel, reçu par la dite passerelle, vers toutes les entités de communication IP connectées à la passerelle, lorsqu'il est exécuté par celle-ci, ledit message étant destiné à être filtré par au moins une desdites entités de communication IP pour déterminer si ledit message est adressé à l'identité publique qui est attribuée à ladite entité de communication IP,
- un programme d'ordinateur pour une entité de communication IP, à laquelle est attribuée une identité publique, **caractérisé en ce qu'**il comprend des instructions agencées pour commander le filtrage d'un message selon un protocole de commande d'appel, reçu par ladite entité, afin de déterminer si ledit message reçu est adressé à l'identité publique qui est attribuée à l'entité, lorsque ledit programme est exécuté par celle-ci.

**Patentansprüche**

**1.** Verfahren zur Verbindung mit einem IP-Netzwerk, durch ein Residential Gateway, einer Vielzahl von IP-Kommunikationseinheiten, denen jeweilige öffentliche Identitäten zugewiesen sind und die ein Anrufsteuerungsprotokoll durchführen können, wobei die IP-Kommunikationseinheiten, innerhalb und außerhalb des Gateways, mit diesem verbunden sind, wobei das Verfahren einen vorhergehenden Schritt der Aufzeichnung der jeweiligen öffentliche Identitäten der IP-Kommunikationseinheiten enthält, wobei jede öffentliche Identität einer Einheit bei der Aufzeichnung einer Netzwerkadresse des Gateways zugeordnet wird, **dadurch gekennzeichnet, dass** das Verfahren außerdem enthält:

- im Fall des Empfangs durch das Gateway einer Mitteilung gemäß dem Anrufsteuerungsprotokoll und an eine der öffentlichen Identitäten gerichtet, einen Schritt der Übertragung der Mitteilung ausgehend von dem Gateway an alle verbundenen Einheiten; und
- nach Empfang der Mitteilung durch eine verbundene Einheit einen Schritt der Filterung der Mitteilung durch die Einheit, während dem die Einheit ermittelt, ob die Mitteilung an die ihr zugeteilte öffentliche Identität gerichtet ist.

2. Verfahren nach Anspruch 1, bei dem das Anrufsteuerungsprotokoll eines der Protokolle der Gruppe ist, die das SIP-Protokoll und das H323-Protokoll enthält.

3. Verfahren nach Anspruch 2, bei dem im Fall einer Mitteilung gemäß dem SIP-Protokoll der Schritt der Filterung der Mitteilung auf der Basis des Inhalts mindestens eines der Felder der Gruppe durchgeführt wird, die das Identifikationsfeld des Empfängers der Mitteilung und das Feld enthält, das die Einheit definiert, die für die Verarbeitung der Mitteilung zuständig ist.

4. Verfahren nach einem der Ansprüche 1 bis 3, bei dem in dem Fall, in dem die IP-Kommunikationseinheit im Filterungsschritt ermittelt, dass die empfangene Mitteilung an die ihr zugeteilte öffentliche Identität gerichtet ist, die Einheit eine der Mitteilung zugeordnete Verarbeitung ausführt.

5. Verfahren nach einem der Ansprüche 1 bis 4, bei dem während des Schritts des vorhergehenden Aufzeichnung die jeweiligen öffentlichen Identitäten der verbundenen Einheiten und die Netzadresse des zugeordneten Gateways in einer Lokalisierungsdatenbank aufgezeichnet werden, die für eine dem Gateway zugeordnete Routing-Netzausrüstung zugänglich ist.

6. Verfahren nach Anspruch 5, bei dem im Fall des Empfangs durch die Routing-Netzausrüstung einer Rufaufbau-Mitteilung gemäß dem Anrufsteuerungsprotokoll, die an eine der Einheiten gerichtet ist, die in Verbindung mit der Netzadresse des Gateways aufgezeichnet wurden, die Routing-Netzausrüstung in der Datenbank die Netzadresse des Gateways ausgehend von der öffentlichen Identität abruft, an die die Mitteilung gerichtet ist, dann die Mitteilung zum Gateway an die abgerufene Netzadresse überträgt.

7. Kommunikationsnetzwerk, das enthält:

- ein Residential Gateway für die Verbindung mit einem IP-Netzwerk einer Vielzahl von IP-Kommunikationseinheiten, die ein Anrufsteuerungsprotokoll durchführen können, und
- mindestens eine IP-Kommunikationseinheit, der eine öffentliche Identität zugeteilt ist, wobei die IP-Kommunikationseinheit ein Modul zur Filterung von Mitteilungen enthält, das eingerichtet ist, um zu ermitteln, ob eine empfangene Mitteilung an die ihr zugewiesene öffentliche Identität gerichtet ist,

wobei, wenn das mit dem IP-Netzwerk verbundene Gateway über eine Netzadresse verfügt, das Gateway ein Modul zur Übertragung, an alle mit ihm verbundenen IP-Kommunikationseinheiten, von Mitteilungen gemäß dem Anrufsteuerungsprotokoll enthält, die vom Gateway empfangen werden und an eine öffentliche Identität gerichtet sind, die einer der mit dem Gateway verbundenen IP-Kommunikationseinheiten zugeordnet ist, wobei jede der Mitteilungen dazu bestimmt ist, von mindestens einer der IP-Kommunikationseinheiten gefiltert zu werden, um zu ermitteln, ob die Mitteilung an die der IP-Kommunikationseinheit zugeteilte öffentliche Identität gerichtet ist.

8. Kommunikationsnetzwerk nach Anspruch 7, **dadurch gekennzeichnet, dass** die IP-Kommunikationseinheit in ein Residential Gateway integriert werden kann, und dass sie Einrichtungen zur Kommunikation mit einem externen nicht-IP-Kommunikationsendgerät enthält.

9. Kommunikationsnetzwerk nach einem der Ansprüche 7 und 8, bei dem das Modul zur Filterung von Mitteilungen eingerichtet ist, um bei Empfang einer Mitteilung mindestens eines der Felder der Gruppe zu analysieren, die ein Identifikationsfeld des Empfängers der Mitteilung und ein Feld enthält, das die Einheit definiert, die für die Verarbeitung der Mitteilung zuständig ist, wobei die Felder in der empfangenen Mitteilung enthalten sind.

10. Computerprogrammsystem, wobei das System aufweist:

- ein Computerprogramm für ein Residential Gateway, **dadurch gekennzeichnet, dass** es Anweisungen enthält, die eingerichtet sind, um die Übertragung, durch das Gateway, einer vom Gateway empfangenen Mitteilung gemäß einem Anrufsteuerungsprotokoll an alle mit dem Gateway verbundenen IP-Kommunikationseinheiten zu steuern, wenn es von diesem ausgeführt wird, wobei die Mitteilung dazu bestimmt ist, von mindestens einer der IP-Kommunikationseinheiten gefiltert zu werden, um zu ermitteln, ob die Mitteilung an die der IP-Kommunikationseinheit zugewiesene öffentliche Identität gerichtet ist,

- ein Computerprogramm für eine IP-Kommunikationseinheit, der eine öffentliche Identität zugewiesen ist, **dadurch gekennzeichnet, dass** es Anweisungen enthält, die eingerichtet sind, um die Filterung einer von der Einheit empfangenen Mitteilung gemäß einem Anrufsteuerungsprotokoll zu steuern, um zu ermitteln, ob die empfangene Mitteilung an die öffentliche Identität gerichtet ist, die der Einheit zugewiesen ist, wenn das Programm von dieser ausgeführt wird.

**Claims**

1. Method for connecting to an IP network, through a residential gateway, a plurality of IP communication entities to which are allocated respective public identities and which are able to implement a call control protocol, said IP communication entities, internal or external to the gateway, being connected to the latter, the method comprising a prior step of registering the respective public identities of said IP communication entities, each entity public identity being associated during registration with a network address of the gateway, **characterized in that** the method further comprises:

   - in the event of the receipt by the gateway of a message according to the call control protocol and addressed to one of said public identities, a step of transferring said message from the gateway to all the connected entities; and
   - after receipt of the message by a connected entity, a step of filtering of the message by said entity, in the course of which the entity determines whether the message is addressed to the public identity allocated to it.

2. Method according to Claim 1, in which the call control protocol is one of the protocols of the group comprising the SIP protocol and the H323 protocol.

3. Method according to Claim 2, in which, in the case of a message according to the SIP protocol, the step of filtering the message is carried out on the basis of the content of one at least of the fields of the group comprising the field identifying the recipient of the message and the field defining the unit handling the processing of the message.

4. Method according to one of Claims 1 to 3, in which, in the case where during the filtering step, the IP communication entity determines that the message received is addressed to the public identity allocated to it, said entity executes a processing associated with the message.

5. Method according to one of Claims 1 to 4, in which, in the course of the prior registration step, the respective public identities of the connected entities and the network address of the associated gateway are registered in a location database, accessible to an item of routing network equipment associated with the gateway.

6. Method according to Claim 5, in which, in the event of reception by the item of routing network equipment of a message to set up a call according to the call control protocol, addressed to one of the entities registered in association with the network address of the gateway, the item of routing network equipment recovers from said database the network address of the gateway, on the basis of the public identity to which the message is addressed, then transmits the message to the gateway at said recovered network address.

7. Communication network comprising:

   - a residential gateway for connecting to an IP network a plurality of IP communication entities that are able to implement a call control protocol, and
   - at least one IP communication entity, to which a public identity is allocated, said IP communication entity comprising a message filtering module, designed to determine whether a message received is addressed to the public identity allocated thereto, in which message filtering module the gateway connected to the IP network having available a network address, the gateway comprises a module for transferring to all the IP communication entities connected to it messages according to the call control protocol, that are received by said gateway and addressed to a public identity associated with one of the IP communication entities connected to the gateway, each of said messages being intended to be filtered by at least one of said IP communication entities to determine whether said message is addressed to the public identity which is allocated to said IP communication entity.

8. Communication network according to Claim 7, **characterized in that** the IP communication entity is able to be integrated into a residential gateway and that it comprises means for communicating with a non-IP external communication terminal.

9. Communication network according to one of Claims 7 and 8, in which the message filtering module is designed, on receipt of a message, to analyze at least one of the fields of the group comprising a field identifying the recipient of the message and a field defining the entity handling the processing of the message, said fields being contained in the message received.

10. System of computer programs, in which said system comprises:

    - a computer program for a residential gateway, **characterized in that** it comprises instructions designed to control the transferring by the gateway of a message according to a call control protocol, received by said gateway, to all the IP communication entities connected to the gateway, when it is executed by the latter, said message being intended to be filtered by at least one of said IP communication entities to determine whether said message is addressed to the public identity which is allocated to said IP communication entity,
    - a computer program for an IP communication entity, to which a public identity is allocated, **characterized in that** it comprises instructions designed to control the filtering of a message according to a call control protocol, received by said entity, so as to determine whether said message received is addressed to the public identity which is allocated to the entity, when said program is executed by the latter.

## FIG. 1A
### (ART ANTÉRIEUR)

## FIG. 1B
### "FORKING" (ART ANTÉRIEUR)

@ RÉSEAU:1.1.1.1:5060
NUMÉRO:+33145294814

@ RÉSEAU:1.1.1.2:5060
NUMÉRO:+33145294814

@ RÉSEAU:1.1.1.3:5060
NUMÉRO:+33145296496

@ RÉSEAU:1.1.1.4:5060

LOGIQUE SIP

PASSERELLE RÉSIDENTIELLE

BASE DE DONNÉES

PROXY SIP

| NUMÉROS | +33145294814 | +33145296496 |
|---------|--------------|--------------|
| @ CIBLES | 1.1.1.4:5060 | 1.1.1.4:5060 |

| NUMÉROS | +33145294814 | +33145296496 |
|---------|--------------|--------------|
| @ CIBLES | 1.1.1.1:5060<br>1.1.1.2:5060 | 1.1.1.3:5060 |

# FIG. 1C
## "TRAITEMENT APPLICATIF INCORPORÉ"
### (ART ANTÉRIEUR)

## FIG. 2A

$$\{E_{x,pu}; E_{y,pu}; P_z\}$$

ENREGISTREMENT
$\{\{pu\}_1^{PU}, z\}$ — A

M (pu) →

TRANSMISSION
M (pu) → $E_{x, pu}$; $E_{y, pu}$ — B $\}P_2$

$C_0$

+ / pu = pu, x; pu, y ? / −

$C_1$

TRAITEMENT
M (pu)

$C_2$

IGNORE

$\}C$

$E_{x, pa}$
OU
$E_{y, pu}$

$$\{\{pu\}_{1, z}^{PU}\}$$

M, (pu) →

RÉCUPÉRATION
pu → z — $B_0$

TRANSMISSION
M (pu) → Pz — $B_1$

$\}ER$

$B_3$ ⎯ $B_2$

TRANSMISSION
M (pu) → $\{E_{x, pu}; E_{y, pu}\}$

$\}P_2$

## FIG. 2B

| NUMÉROS | +33145294814 | +33145296496 |
|---|---|---|
| @ CIBLES | 1.1.1.4 | 1.1.1.4 |

@ RÉSEAU:10.1.1.1
NUMÉRO:+33145294814 FM

3.INVITE 1.1.1.4
TO:+33145294814

VEG

2.INTERROGATION DE LA BASE

@ RÉSEAU:10.1.1.2
NUMÉRO:+33145294814 FM

TM

DB

1.INVITE
+33145294814
TO:+33145294814

BASE DE DONNÉES

@ RÉSEAU:10.1.1.3
NUMÉRO:+33145296496

4b.INVITE 1.1.1.4
TO:+33145294814

PROXY SIP

ER

FM

P$_z$

@ RÉSEAU:10.1.1.4

4c.INVITE 1.1.1.4
TO:+33145294814

EP 1 964 368 B1

**FIG. 2C**